# EUROPÄISCHE PATENTSCHRIFT

(11) **EP 0 685 262 B1**
(45) Veröffentlichungstag und Bekanntmachung des Hinweises auf die Patenterteilung: **04.08.1999**
(21) Anmeldenummer: 95108166.0
(22) Anmeldetag: 29.05.1995
(51) Int. Cl.: B01J 38/46, B01J 23/92, B01J 23/26

(54) **Verfahren zur Regenerierung eines Fluorierungskatalysators**
Process for the regeneration of a fluorination catalyst
Procédé de régénération d'un catalyseur de fluoration

(30) Priorität: 03.06.1994 DE 4419534
(43) Veröffentlichungstag der Anmeldung: 06.12.1995
(73) Patentinhaber: SOLVAY (Société Anonyme), 1050 Bruxelles (BE)
(72) Erfinder: Ebmeyer, Frank, Dr., D-86153 Augsburg (DE); Finzel, Ralf, Dr., D-65795 Hattersheim (DE); Siegemund, Günter, Dr., D-65719 Hofheim (DE); Wanzke, Wolfgang, Dr., D-86405 Meitingen (DE)
(74) Vertreter: Jacques, Philippe

(56) Entgegenhaltungen:
- EP-A- 0 475 693
- WO-A-93/10898
- US-A- 3 884 834
- US-A- 4 547 483

## Beschreibung

Die Erfindung betrifft ein Verfahren zur Regenerierung eines chrom- und magnesiumhaltigen Fluorierungskatalysators.

Fluorhaltige Kohlenwasserstoffhalogenide werden beispielsweise als Kältemittel oder als Lösemittel zur Verschäumung eingesetzt. In jüngster Zeit wurden die chlorhaltigen FCKW für die Zerstörung des Ozongürtels in der Stratosphäre verantwortlich gemacht, so daß der FCKW-Einsatz auch international stark eingeschränkt wurde.
Deshalb werden chlorfreie wasserstoffhaltige Fluoralkane (H-FKW), die kein Ozonabbaupotential aufweisen und bereits in der Troposphäre abgebaut werden, als Alternativen betrachtet.

Wasserstoffhaltige Fluoralkane (H-FKW), wie das 1,1,1,2-Tetrafluorethan (H-FKW 134a), werden durch heterogen katalysierte Gasphasenreaktionen an Festbett-Katalysatoren auf Chrom-Basis hergestellt. Eine große Anzahl dieser chromhaltigen Fluorierungskatalysatoren ist in der Literatur beschrieben. Diese Katalysatoren zeigen zwar eine gute Anfangsaktivität, verlieren aber während einer längeren Reaktionszeit an Aktivität, was ein Problem für ihre industrielle Anwendbarkeit darstellt. Es sind daher bereits verschiedene Methoden zur Regenerierung solcher Katalysatoren beschrieben worden.

Gemäß Chemical Abstracts 112(14):121102z oder US-A-2 745 886 werden chromhaltige Fluorierungskatalysatoren mit Hilfe von Sauerstoff (1 bis 30 Vol%) in einer getrennten Betriebsphase regeneriert. Anschließend muß der Katalysator mit HF nachbehandelt werden, ehe er wieder eingesetzt werden kann.

In EP-A-0 475 693 wird eine Regenerierung mit einem Gemisch aus einem Oxydationsmittel, vorzugsweise Luft, und HF beschrieben, wobei der Anteil des Oxydationsmittels maximal 30 Mol% beträgt. Eine Nachbehandlung mit HF ist nicht notwendig. Ein Nachteil dieses Verfahrens liegt in dem relativ geringen Anteil des Oxydationsmittels, insbesondere Luft, der maximal zulässig ist (30 Mol%), um die Aktivität der Chrom-Katalysatoren wiederherzustellen. Bei höherem Anteil des Oxydationsmittels würde es offenbar zu einer unerwünschten stark exothermen Reaktion und zu Chromverlust des Katalysators kommen. Wegen dieses relativ geringen tolerierbaren Anteils des Oxydationsmittel dauern die in regelmäßigen Abständen notwendige Regenerierungen des Katalysators relativ lange, was unerwünscht lange Unterbrechungen der mit ihm durchzuführenden Fluorierungsreaktion bedeutet.

Überraschenderweise wurde nun gefunden, daß sich magnesiumhaltige Chromkatalysatoren, insbesondere der in US-A-4 547 483 beschriebene Chrommagnesitkatalysator, hervorragend mit einer Mischung aus O₂ und HF regenerieren lassen, die 30 bis 90 Mol% Sauerstoff enthält. Die Regenerierung läuft wegen des hohen Sauerstoffgehalts der Mischung sehr schnell ab. Anschließend ist der Katalysator sofort wieder einsatzbereit; eine Nachbehandlung mit HF ist nicht erforderlich. Der Katalysator fällt nur für kurze Zeit für seinen Einsatz bei Fluorierungsreaktionen aus. Auch bei einem Gehalt von 10 bis 30 Mol% Sauerstoff in der HF/O₂-Mischung ist eine Regenerierung ohne weiteres durchführbar, dauert jedoch länger als bei einem Gehalt von 30 bis 90 Mol%.

Gegenstand der Erfindung ist ein Verfahren zur Regenerierung eines chrom-und magnesiumhaltigen Fluorierungskatalysators nach Benutzung in einer Fluorierungsreaktion, dadurch gekennzeichnet, daß man den benutzten Katalysator bei einer Temperatur von 200 bis 500°C mit einem Gemisch behandelt, das mindestens 10 Mol% HF, 30 bis 90 Mol% O₂ und 0 bis 60 Mol% inertes Gas enthält.

Als "inerte Gase" kommen alle Gase infrage, die unter den Regenerierungsbedingungen inert sind, wie N₂, Edelgase oder CO₂, vor allem N₂.

Das zur Regenerierung eingesetzte Gemisch kann auch aus entsprechenden Anteilen von HF, O₂ und Luft hergestellt werden.

Vorzugsweise enthält das zur Regenerierung eingesetzte Gemisch mindestens 10 Mol% HF, 40 bis 70 Mol% O₂ und 0 bis 60 Mol% inertes Gas.
Besonders geeignet sind Gemische, die kein inertes Gas enthalten, insbesondere solche, die aus 50 bis 60 Mol% HF und 50 bis 40 Mol% O₂ bestehen.

Die Regenerierung wird im allgemeinen bei 200 bis 500°C, vorzugsweise 300 bis 450°C, insbesondere 350 bis 450°C durchgeführt.

Der (absolute) Druck beträgt im allgemeinen 1 bis 20 bar, vorzugsweise 2 bis 10 bar.

Der chrom- und magnesiumhaltige Fluorierungskatalysator enthält im allgemeinen 10 bis 40 Gew.-% Mg, vorzugsweise 15 bis 35 Gew.-%, insbesondere 20 bis 30 Gew.-%. An Cr enthält er im allgemeinen 10 Gew.-%, insbesondere 3 bis 6 Gew.-%. Der Rest sind die Anionen der eingesetzten Mg-und Cr-Verbindungen, sowie optional Materialien, wie Graphit oder Aktivkohle, mit denen man diese Verbindungen vermischen kann.

Im allgemeinen werden wasserfreie oder hydratisierte Verbindungen des dreiwertigen Chroms eingesetzt, z.B. das Sulfat, Fluorid, Nitrat oder Chlorid, vorzugsweise das Nitrat oder Chlorid. Als Magnesiumverbindungen werden im allgemeinen das Oxid oder Hydroxid eingesetzt.
Ein besonders geeigneter Katalysator ist der in der US-A-4 547 483 beschriebene Chrommagnesit-Katalysator.

Die folgenden Beispiele sollen die Erfindung erläutern.

Dabei wurde ein chrom- und magnesiumhaltiger Fluorisierungskatalysator benutzt, der gemäß US-A-4 547 483, Beispiel 1, hergestellt worden war und im folgenden als "Chrommagnesitkatalysator" bezeichnet wird.

### Beispiel 1:

500 ml des Chrommagnesitkatalysators gemäß US-A-4 547 483 wurden in ein Rohr aus Nickel oder VA-Stahl mit 5 cm lichter Weite und 100 cm Länge gegeben. Der Katalysator wurde auf 380°C erhitzt. Anschließend wurden 80 g/h 2-Chlor-1,1,1-trifluorethan (R133a) und 40 g/h Fluorwasserstoff (Molverhältnis 1:3) im gasförmigen Zustand über den Katalysator geleitet. Die den Reaktor verlassenden gasförmigen Reaktionsprodukte wurden in eine mit Wasser gefüllten Waschvorlage geleitet, in der entstandener Chlorwasserstoff und überschüssiger Fluorwasserstoff absorbiert wurden. Die gasförmigen, nicht wasserlöslichen Reaktionsprodukte wurden gaschromatographisch analysiert. Die Ausbeute an R134a fiel innerhalb von 43 Stunden von 18,2 % auf 13,9 % ab. Die 2-Chlor-1,1,1-trifluorethan-Zufuhr wurde abgestellt. Nach 30 Minuten wurde die Fluorwasserstoffzufuhr auf 20 g/h (1 Mol/h) reduziert und 15 l/h (0,67 Mol/h) Sauerstoff zugegeben. Das entsprach einem Molverhältnis von Fluorwasserstoff zu Sauerstoff von 3:2, d.h. 60 Mol% HF und 40 Mol% O₂. Die Temperatur im Reaktorrohr stieg zunächst bis auf 405°C an und sank dann wieder. Als sie nach 3 Stunden wieder auf 380°C zurückgegangen war, wurde die Sauerstoffzufuhr beendet. Danach wurde der regenerierte Katalysator wieder zur Fluorierung benutzt, indem Fluorwasserstoff (40 g/h) gemeinsam mit 2-Chlor-1,1,1-trifluorethan (80 g/h) über ihn geleitet wurden. Die gaschromatographische Analyse ergab nach 2 Stunden Reaktionszeit des regenerierten Katalysators eine Ausbeute an R134a von 18,3 %.

### Beispiel 2:

In die in Beispiel 1 beschriebene Versuchsanordnung wurden 500 ml des Chrommagnesitkatalysators gegeben und auf 360°C erhitzt. 60 g/h 2-Chlor-1,1,1-trifluorethan (R 133a) und 60 g/h Fluorwasserstoff wurden gasförmig bei einem Druck von 10 bar (absolut) über den Katalysator geleitet (Molverhältnis Fluorwasserstoff:R133a = 5,9:1). Die Ausbeute an R134a betrug zu Beginn der Reaktion 25,6 % und fiel im Laufe der Reaktion innerhalb von 94 Stunden auf 23,4 % ab. Zur Regenerierung des Katalysators wurde die 2-Chlor-1,1,1-trifluorethan-Zufuhr abgestellt und der Druck auf 2 bar (absolut) reduziert. Nach 25 Minuten wurde die Fluorwasserstoffzufuhr auf 35 g/h gedrosselt und Sauerstoff in einer Menge von 40 l/h zugegeben (Molverhältnis Fluorwasserstoff:Sauerstoff = 1:1, d.h. 50 Mol% HF und 50 Mol% O₂). Die Katalysatortemperatur stieg zunächst innerhalb von 0,5 Stunden auf 405°C und sank dann innerhalb von 4 Stunden wieder auf den Ausgangswert von 360°C. Diese Reaktionsphasen wurden viermal durchgeführt, wobei nach den Reaktionsphasen 1, 2 und 3 jeweils eine Regenerierungsphase eingeschaltet wurde. Die Ausbeuten sind in Tabelle 1 aufgelistet.

**Tabelle 1**

| Reaktionsphase | Anfangsausbeute R134a [%] | Endausbeute R134a [%] | Laufzeit [h] |
|---|---|---|---|
| 1 | 25,6 | 23,4 | 94 |
| 2 | 25,3 | 23,5 | 96 |
| 3 | 25,6 | 23,2 | 90 |
| 4 | 25,7 | 23,2 | 92 |

### Beispiel 3:

In die in Beispiel 1 beschriebene Versuchsanordnung wurden 1000 ml des Chrommagnesitkatalysators gegeben und auf 420°C erhitzt. Dann wurden 120 g/h 2-Chlor-1,1,1-trifluorethan (R 133a) und 120 g/h Fluorwasserstoff gasförmig über den Katalysator geleitet (Molverhältnis Fluorwasserstoff:R133a = 5,9:1). Nach 5 Stunden betrug die Ausbeute an R134a 27,9 %. Nach weiteren 72 Stunden wurde eine Ausbeute an R134a von 24,1 % ermittelt. Die 2-Chlor-1,1,1-trifluorethan-Zufuhr wurde dann abgestellt. Nach 30 Minuten wurde die Fluorwasserstoffzufuhr auf 27 g/h reduziert und 20 l/h Sauerstoff zugegeben (Molverhältnis Fluorwasserstoff:Sauerstoff = 3:2, d.h. 60 Mol % HF und 40 Mol% O₂). Die Temperatur im Katalysator stieg zunächst von 420°C auf 450°C und sank dann innerhalb von 3 Stunden auf den Ausgangswert von 420°C. Die Sauerstoffzufuhr wurde dann abgestellt und die Zufuhr von Fluorwasserstoff und 2-Chlor-1,1,1-trifluorethan auf die Anfangswerte eingestellt. Nach weiteren 5 Stunden wurde eine Ausbeute an R134a von 28,2 % ermittelt.

### Beispiel 4:

In die in Beispiel 1 beschriebene Versuchsanordnung wurden 1000 ml des Chrommagnesitkatalysators gegeben und auf 320°C erhitzt. Dann wurden 80 g/h 2-Chlor-1,1,1-trifluorethan (R 133a) und 120 g/h Fluorwasserstoff gasförmig über den Katalysator geleitet (Molverhältnis Fluorwasserstoff:2-Chlor-1,1,1-trifluorethan = 8,9:1). Nach 8 Stunden betrug die Ausbeute an R134a 20,4 %. Nach weiteren 73 Stunden wurde eine Ausbeute an R134a von 16,8 % ermittelt. Die 2-Chlor-1,1,1-trifluorethan-Zufuhr wurde dann abgestellt. Nach 30 Minuten wurde die Fluorwasserstoffzufuhr auf 36 g/h reduziert und 40 l/h Sauerstoff zugegeben (Molverhältnis Fluorwasserstoff:Sauerstoff = 1:1, d.h. 50 Mol% HF und 50 Mol% O₂). Die Temperatur im Katalysator stieg zunächst von 320°C auf 360°C und sank dann innerhalb von 2,5 Stunden auf den Ausgangswert von 320°C. Die Sauerstoffzufuhr wurde dann abgestellt. Nach 20 Minuten wurde die Zufuhr von Fluorwasserstoff und 2-Chlor-1,1,1-trifluorethan auf die Anfangswerte eingestellt. Nach weiteren 3 Stunden wurde eine Ausbeute an R134a von 20,2 % ermittelt.

## Patentansprüche

1. Verfahren zur Regenerierung eines chrom- und magnesiumhaltigen Fluorierungskatalysators nach Benutzung in einer Fluorierungsreaktion, dadurch gekennzeichnet, daß man den benutzten Katalysator bei einer Temperatur von 200 bis 500°C mit einem Gemisch behandelt, das mindestens 10 Mol% HF, 30 bis 90 Mol% O₂ und 0 bis 60 Mol% inertes Gas enthält.

2. Verfahren nach Anspruch 1, dadurch gekennzeichnet, daß der Sauerstoffanteil des Gemischs 40 bis 70 Mol% beträgt.

3. Verfahren nach Anspruch 1, dadurch gekennzeichnet, daß das Gemisch 50 bis 60 Mol% HF und 50 bis 40 Mol% O₂ enthält und frei von inertem Gas ist.

4. Verfahren nach einem der Ansprüche 1 bis 3, dadurch gekennzeichnet, daß bei einer Temperatur von 300 bis 450°C gearbeitet wird.

## Claims

1. A process for regenerating a fluorination catalyst containing chromium and magnesium after use in a fluorination reaction, which comprises treating the used catalyst at a temperature of from 200 to 500°C with a mixture comprising at least 10 mol % of HF, from 30 to 90 mol % of O₂ and from 0 to 60 mol % of inert gas.

2. The process as claimed in claim 1, wherein the oxygen content of the mixture is from 40 to 70 mol %.

3. The process as claimed in claim 1, wherein the mixture comprises from 50 to 60 mol % of HF and from 50 to 40 mol % of O₂ and is free of inert gas.

4. The process as claimed in any one of claims 1 to 3, carried out at a temperature of from 300 to 450°C.

## Revendications

1. Procédé pour la régénération d'un catalyseur de fluoration contenant du chrome et du magnésium après son utilisation dans une réaction de fluoration, caractérisé en ce qu'on traite le catalyseur utilisé à une température de 200 à 500°C avec un mélange qui contient du HF à concurrence d'au moins 10 moles %, du O₂ à concurrence de 30 à 90 moles % et un gaz inerte à concurrence de 0 à 60 moles %.

2. Procédé selon la revendication 1, caractérisé en ce que la fraction d'oxygène du mélange s'élève de 40 à 70 moles %.

3. Procédé selon la revendication 1, caractérisé en ce que le mélange contient du HF à concurrence de 50 à 60 moles % et du O₂ à concurrence de 50 à 40 moles % et est exempt de gaz inerte.

4. Procédé selon l'une quelconque des revendications 1 à 3, caractérisé en ce qu'on travaille à une température de 300 à 450°C.
